(19) **Europäisches Patentamt / European Patent Office / Office européen des brevets**

(11) **EP 4 765 850 A1**

(12) **EUROPEAN PATENT APPLICATION**

(43) Date of publication:
24.06.2026 Bulletin 2026/26

(21) Application number: 25222941.4

(22) Date of filing: 12.12.2025

(51) International Patent Classification (IPC):
H04N 25/53 (2023.01)    H04N 23/741 (2023.01)
H04N 23/743 (2023.01)    H04N 23/745 (2023.01)
H04N 25/589 (2023.01)    H04N 25/773 (2023.01)

(52) Cooperative Patent Classification (CPC):
H04N 25/773; H04N 23/741; H04N 23/743;
H04N 23/745; H04N 25/53; H04N 25/589

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.12.2024 JP 2024224692

(71) Applicant: Canon Kabushiki Kaisha
Tokyo, 146-8501 (JP)

(72) Inventor: NUMATA, Aihiko
Ohta-ku, Tokyo, 146-8501 (JP)

(74) Representative: TBK
Bavariaring 4-6
80336 München (DE)

(54) **PHOTOELECTRIC CONVERSION DEVICE, PHOTOELECTRIC CONVERSION METHOD, AND STORAGE MEDIUM**

(57)    A photoelectric conversion device has an avalanche photodiode, and a counter counting and outputting the number of output signals from the avalanche photodiode until the number reaches the count number. An exposure time of the avalanche photodiode is controlled and a recharge cycle of the avalanche photodiode is controlled. Control is performed such that a ratio of the count number to the maximum number of times of recharging determined by a quotient obtained by dividing the exposure time by the recharge cycle is set to a first ratio in a first frame, and the ratio of the count number to the maximum number of times of recharging is set to a second ratio smaller than the first ratio in a second frame different from the first frame.

**FIG. 6B**

EP 4 765 850 A1

**Description**

TECHNICAL FIELD

The present disclosure relates to a photoelectric conversion device, a photoelectric conversion method, a storage medium, and the like.

BACKGROUND

Recently, a photoelectric conversion element which digitally counts the number of photons arriving at an avalanche photodiode (APD) and outputs count values from pixels as photoelectrically converted digital signals has been proposed.

Japanese Patent Laid-Open No. 2020-123847 describes a photoelectric conversion device capable of favorably detecting the number of periods during which avalanche multiplication has occurred by controlling a recharging timing of an APD using pulse signals.

In the photoelectric conversion device of Japanese Patent Laid-Open No. 2020-123847, photons can be counted one by one for each cycle of a pulse generated by a pulse generation circuit. In the case of using this technique, count omissions occur when a plurality of photons are incident in one pulse cycle.

However, when images of ordinary stationary light are being captured, an influence of count omissions can be reduced through correction processing by statistically estimating the number of incident photons in one pulse cycle.

Meanwhile, under an environment where a light source flashing within one frame, particularly an LED light source using a pulse modulation-type drive method, is used as illumination, or when a light source or the like moving within a frame is used, many count omissions occur compared to when stationary light is used. For this reason, the accuracy of count omission correction processing deteriorates, and the color tone changes compared to that in the actual environment.

SUMMARY

According to an aspect of the embodiment, a photoelectric conversion device has an avalanche photodiode, and a counter counting and outputting a number of output signals from the avalanche photodiode until the number reaches the a count number. An exposure time of the avalanche photodiode is controlled and a recharge cycle of the avalanche photodiode is controlled. Control is performed such that a ratio of the count number to a maximum number of times of recharging determined by a quotient obtained by dividing the exposure time by the recharge cycle is set to a first ratio in a first frame, and the ratio of the count number to the maximum number of times of recharging is set to a second ratio smaller than the first ratio in a second frame.

Further features of the present disclosure will become apparent from the following description of Embodiments with reference to the attached drawings.

BRIEF DESCRIPTION OF THE DRAWINGS

FIG. 1 is a view showing an example of a constitution of a photoelectric conversion element 100 according to First Embodiment of the disclosure.

Fig. 2 is a view showing an example of a constitution of a sensor board 11 according to First Embodiment.

Fig. 3 is a view showing an example of a constitution of a circuit board 21 according to First Embodiment.

Fig. 4 is a view showing an example of a pixel 101 according to First Embodiment and an equivalent circuit of a signal processing circuit 103 corresponding to the pixel 101.

Fig. 5 is an explanatory timing chart of a photoelectric conversion element of First Embodiment.

Fig. 6A is a view showing an example of pixel disposition of the photoelectric conversion element of First Embodiment, and Fig. 6B is a view showing an example of a drive timing chart of the photoelectric conversion element of First Embodiment.

Fig. 7A is an explanatory view of a counting operation when stationary light is used as illumination.

Fig. 7B is an explanatory view of a counting operation when a light source flashing over time is used as illumination.

Fig. 7C is an explanatory view of illumination intensities in attention regions when there are light sources moving within one frame.

Fig. 8A is a view showing an example in which a second ratio obtained by dividing the saturation judgment count number by the maximum number of times of recharging is set to be smaller than a first ratio by reducing the saturation judgment count number.

Fig. 8B is a view showing an example in which the second ratio obtained by dividing the saturation judgment count number by the maximum number of times of recharging is set to be smaller than the first ratio by shortening a recharge cycle.

Fig. 8C is a view showing an example in which the second ratio obtained by dividing the saturation judgment count number by the maximum number of times of recharging is set to be smaller than the first ratio by lengthening an exposure time.

Figs. 9A and 9B are views each expressing response characteristics of the pixels in a first frame and a second frame.

Fig. 10A is a view showing an example of response characteristics of the pixels in the first frame, and Fig. 10B is a view showing an example of response characteristics of the pixels in the second frame.

Fig. 11 is a functional block diagram showing an example of a constitution of the photoelectric conversion element using photoelectric conversion devices of First Embodiment to Fourth Embodiment.

DESCRIPTION OF THE EMBODIMENTS

Hereinafter, with reference to the accompanying drawings, favorable modes of the disclosure will be described using Embodiments. In each diagram, the same reference signs are applied to the same members or elements, and duplicate description will be omitted or simplified.

<First Embodiment>

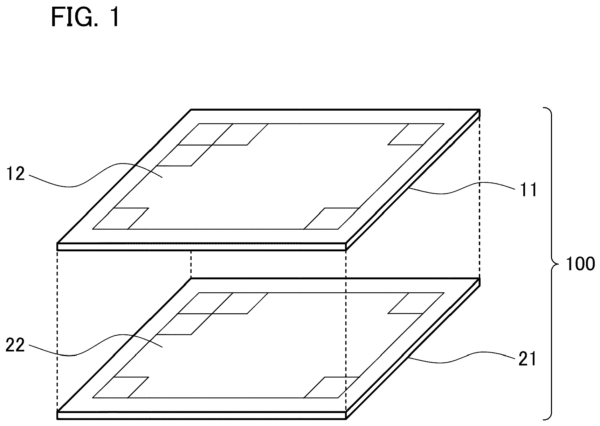

Fig. 1 is a view showing an example of a constitution of a photoelectric conversion element 100 according to First Embodiment of the disclosure. A sensor board 11 includes a pixel region 12, and a circuit board 21 includes a circuit region 22 for processing a signal detected in the pixel region 12.

In the Embodiment, an example of a photoelectric conversion device having a so-called laminated structure, in which the photoelectric conversion element 100 is constituted of two boards (the sensor board 11 and the circuit board 21) are laminated and electrically connected, will be described. However, a so-called non-laminated structure, in which a constitution included in a sensor board and a constitution included in a circuit board are disposed on a common semiconductor layer, may be adopted.

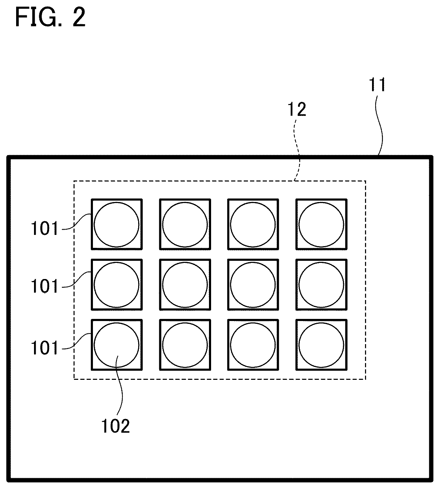

Fig. 2 is a view showing an example of a constitution of the sensor board 11 according to First Embodiment. The pixel region 12 of the sensor board 11 includes a plurality of pixels 101 which are disposed two-dimensionally in directions across a plurality of rows and columns. The pixel 101 is provided with a photoelectric conversion unit 102 including an avalanche photodiode (hereinafter, an APD).

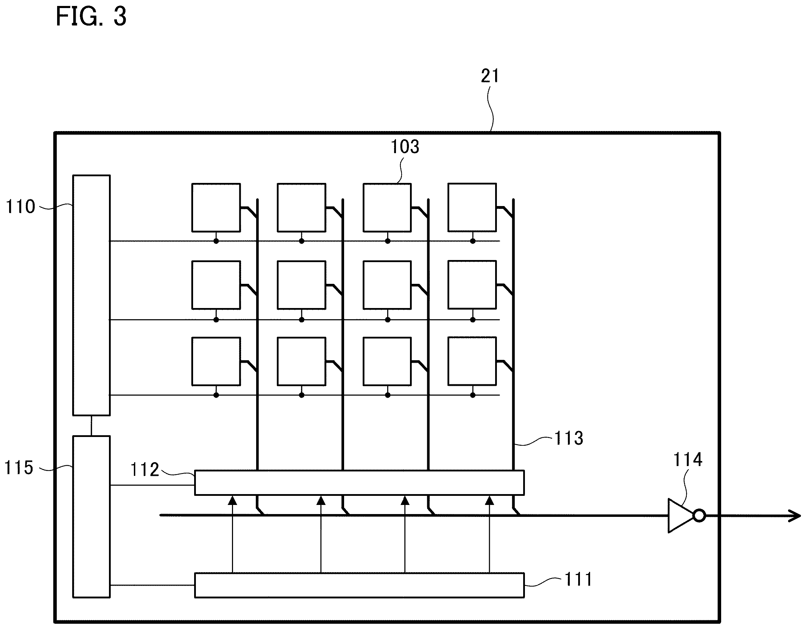

Fig. 3 is a view showing an example of a constitution of the circuit board 21 according to First Embodiment. The circuit board 21 has signal processing circuits 103, which perform processing of electric charge photoelectrically converted by the photoelectric conversion units 102 in Fig. 2, a reading circuit 112, a control pulse generation unit 115, a horizontal scanning circuit 111, signal lines 113, and a vertical scanning circuit 110.

The vertical scanning circuit 110 receives a control pulse supplied from the control pulse generation unit 115 and supplies a control pulse to each pixel. A logic circuit such as a shift register or an address decoder is used as the vertical scanning circuit 110.

A signal output from the photoelectric conversion unit 102 of the pixel is processed by the signal processing circuit 103. The signal processing circuit 103 is provided with a counter, a memory, and the like, and the memory retains digital values. In order to read a signal from the memory of each pixel retaining digital signals, the horizontal scanning circuit 111 inputs a control pulse to the signal processing circuits 103 to sequentially select each column.

In the column which has been selected, a signal is output to the signal line 113 from the signal processing circuit 103 of the pixel selected by the vertical scanning circuit 110. A signal output from the signal line 113 is output to the outside of the photoelectric conversion element 100 via an output circuit 114.

As shown in Figs. 2 and 3, a plurality of signal processing circuits 103 are disposed in a region overlapping the pixel region 12 in a plan view. Further, in a plan view, the vertical scanning circuit 110, the horizontal scanning circuit 111, the reading circuit 112, the output circuit 114, and the control pulse generation unit 115 are disposed in an overlapping manner between an end of the sensor board 11 and an end of the pixel region 12.

In other words, the sensor board 11 has the pixel region 12 and a non-pixel region disposed around the pixel region 12. Further, the vertical scanning circuit 110, the horizontal scanning circuit 111, the reading circuit 112, the output circuit 114, and the control pulse generation unit 115 are disposed in a region overlapping the non-pixel region in a plan view.

Disposition of the signal lines 113 and disposition of the reading circuit 112 and the output circuit 114 are not limited to those in Fig. 3. For example, the signal lines 113 may be disposed in a manner of extending in the row direction, and the reading circuit 112 may be disposed at an end to which the signal lines 113 extend.

In addition, regarding the function of the signal processing unit, it is not necessary to provide one signal processing unit for each of all the photoelectric conversion units, and a constitution in which one signal processing unit is shared by a plurality of photoelectric conversion units and signal processing is performed sequentially may be adopted.

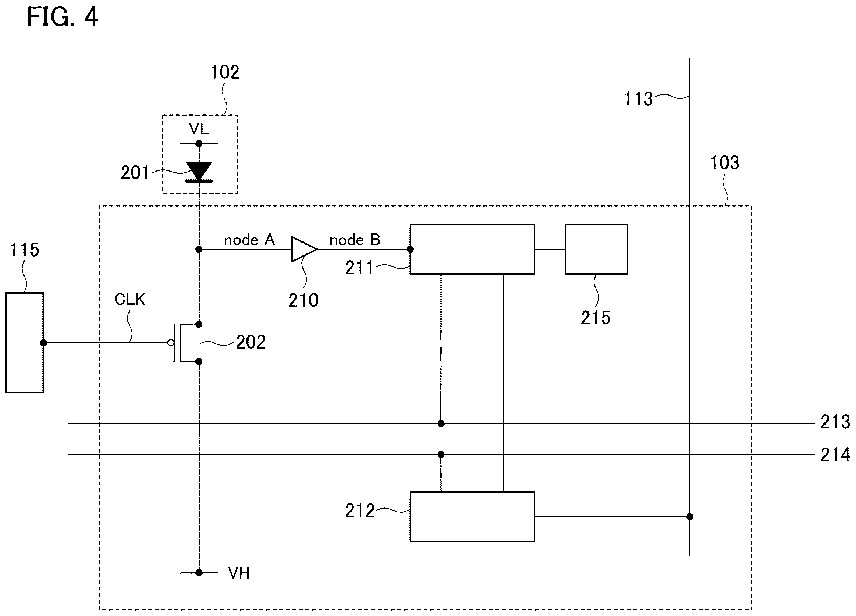

Fig. 4 is a view showing an example of the pixel 101 according to First Embodiment and an equivalent circuit of the signal processing circuit 103 corresponding to the pixel 101.

An APD 201 generates electric charge pairs in response to incident light through photoelectric conversion. One of two nodes of the APD 201 is connected to a power supply line to which a drive voltage VL (first voltage) is supplied.

In addition, the other of the two nodes of the APD 201 can be connected to a power supply line, to which a drive voltage VH (second voltage) higher than the voltage VL is supplied, via a switch 202. In Fig. 4, one node of the APD 201 is an anode, and the other node of the APD is a cathode.

A reverse bias voltage causing the APD 201 to perform an avalanche multiplication operation is supplied to the anode and the cathode of the APD 201. In a state in which such a voltage is supplied, electric charge generated by incident light causes avalanche multiplication so that an avalanche current is generated.

When a reverse bias voltage is supplied, there are a Geiger mode operated with a voltage difference between the anode and the cathode larger than a breakdown voltage, and a linear mode operated with a voltage difference between the anode and the cathode closer to or smaller than the breakdown voltage. An APD operating in the Geiger mode will be referred to as an SPAD. In the case of the SPAD, for example, the voltage VL (first voltage) is -30 V, and the voltage VH (second voltage) is 1 V.

The switch 202 is connected to the power supply line to which the drive voltage VH is supplied, and one node of the anode and the cathode of the APD 201. Further, the switch 202 switches a resistance value between the APD 201 and the power supply line to which the drive voltage VH is supplied.

That is, the switch 202 is connected to one node of the anode and the cathode of the avalanche photodiode and the power supply line to which a drive voltage is applied, and switches the resistance value between one node and the power supply line. In addition, the switch 202 is used for controlling a recharge cycle.

Here, in switching the resistance value, in one embodiment, the resistance value is changed by ten times or greater, and in another embodiment, the resistance value is changed by a hundred times or greater. Hereinafter, a decrease in the resistance value will be referred to as the switch 202 being turned on, and an increase in the resistance value will be referred to as the switch 202 being turned off.

The switch 202 functions as a quench element. That is, the switch 202 functions as a load circuit (quench circuit) at the time of signal multiplication through avalanche multiplication and performs a quench operation of restricting avalanche multiplication by restricting a voltage supplied to the APD 201.

In addition, the switch 202 performs a recharging operation of returning the voltage supplied to the APD 201 to the drive voltage VH by causing a current to flow by an amount corresponding to the voltage drop in a quench operation. The switch 202 can be constituted of a MOS transistor, and Fig. 4 shows a case in which the switch 202 is a PMOS transistor.

A control signal CLK for controlling the switch 202 is applied from the control pulse generation unit 115 serving as a signal generation unit to a gate electrode of the MOS transistor constituting the switch 202.

The control pulse generation unit 115 controls the recharge cycle of the avalanche photodiode by controlling the voltage applied the gate electrode of the switch 202 to control ON and OFF of the switch 202. In addition, a control unit 801 (which will be described below) serving as an exposure time control unit controls the exposure time (count time) of the avalanche photodiode.

The signal processing circuit 103 has a waveform shaping unit 210, a counter circuit 211, and a selection circuit 212. In one embodiment, the signal processing circuit 103 need only have at least any one of the waveform shaping unit 210, the counter circuit 211, and the selection circuit 212.

The waveform shaping unit 210 outputs pulse signals by shaping the voltage change in the cathode of the APD 201 obtained when photons are detected. For example, an inverter circuit is used as the waveform shaping unit 210. A circuit in which a plurality of inverters are connected in series may be used as the inverter circuit, or other circuits having a waveform shaping effect may be used.

The counter circuit 211 counts pulse signals output from the waveform shaping unit 210 and retains the count value. In addition, when a control pulse RES is supplied via a drive line 213, signals retained in the counter circuit 211 are reset.

A saturation judgment unit 215 judging saturation of the number of output signals measured by the counter circuit is connected to the counter circuit 211. When the number of output signals measured by the counter circuit 211 reaches the saturation judgment count number, the saturation judgment unit 215 stops counting up pulse signals by the counter circuit and causes the saturation judgment count number to be maintained in the counter circuit 211 as a count value. The saturation judgment count number can be set as a predetermined threshold.

In the Embodiment, a quotient obtained by dividing the length of the exposure time by the recharge cycle will be referred to as the maximum number of times of recharging. In addition, control is performed such that the ratio of the saturation judgment count number to the maximum number of times of recharging is set to a first ratio in a first frame and the ratio of the saturation judgment count number to the maximum number of times of recharging is set to a second ratio smaller than the first ratio in a second frame different from the first frame.

Specifically, the control unit 801 controls at least one of the recharge cycle, the exposure time, and the saturation judgment count number to set the second ratio to be smaller than the first ratio. In order to control the saturation judgment count number for each frame, it may be controlled by changing the number of counts for saturation judgment from the control pulse generation unit 115 using a signal line (not shown).

A control pulse SEL is supplied to the selection circuit 212 from the vertical scanning circuit 110 in Fig. 3 via a drive line 214 in Fig. 4 (not shown in Fig. 3), thereby switching between electrical connection and disconnection between the counter circuit 211 and the signal line 113. Examples of the selection circuit 212 include a buffer circuit for outputting a signal.

An output signal OUT shown in Fig. 4 is an output signal (pixel output), and the count value of the counter circuit 211 is output. That is, the counter circuit 211 functions as a counter counting and outputting the number of output signals from the avalanche photodiode until the number reaches the saturation judgment count number.

A switch such as a transistor may be disposed between the switch 202 serving as a quench element and the APD 201 or between the photoelectric conversion unit 102 and the signal processing circuit 103 to switch electrical connection. Similarly, supply of the voltage VH or the voltage VL supplied to the photoelectric conversion unit 102 may be electrically switched using a switch such as a transistor.

It is possible to perform a quench operation and a recharging operation using the switch 202 in response to avalanche multiplication in the APD 201. However, it may not be judged as an output signal depending on the timing of detecting photons.

For example, it is assumed that avalanche multiplication occurs in the APD, an input voltage to a node nodeA is caused to be at a low level, and a recharging operation is performed. At this time, the judgment threshold of the waveform shaping unit 210 is set to a voltage higher than the voltage difference causing avalanche multiplication in the APD.

If photons are incident when the voltage of the node nodeA is in a state of being lower than the judgment threshold due to a recharging operation and is a voltage allowing avalanche multiplication in the APD, avalanche multiplication occurs in the APD and the voltage of the nodeA drops.

Namely, since the voltage of the nodeA drops when it becomes a voltage lower than the judgment threshold, even though photons are detected, the output voltage from a node nodeB does not change. Therefore, even though avalanche multiplication occurs, they are not judged as signals.

Particularly, since photons enter continuously in a short period under high illumination, they are less likely to be judged as signals. Accordingly, even though the illumination is high, the actual number of incident photons and the output signals are likely to be discrepant from each other.

In contrast, in the Embodiment, the switch 202 is switched between ON and OFF by applying the control signal CLK to the switch 202, and therefore they can be judged as signals even when photons continuously enter the APD in a short period of time.

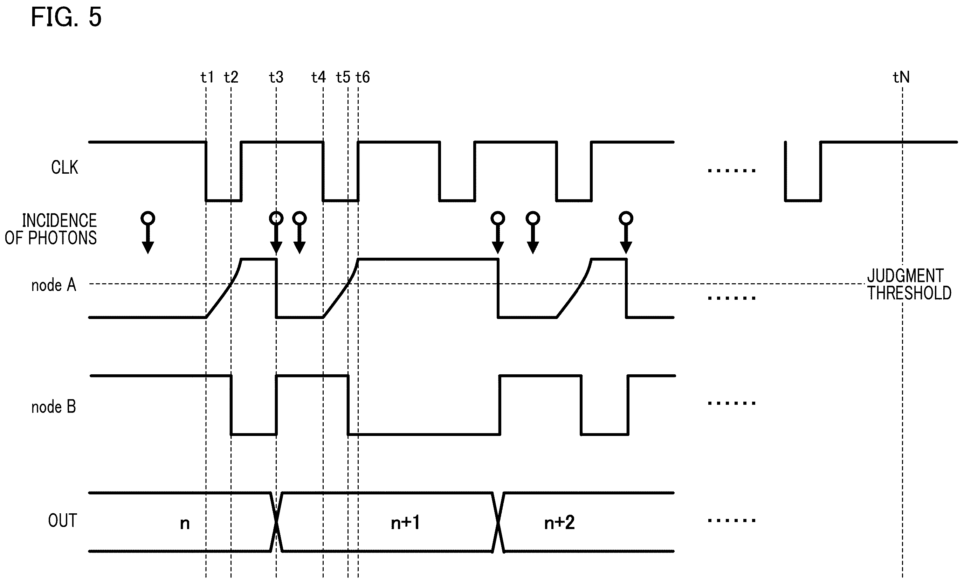

Fig. 5 is an explanatory timing chart of a photoelectric conversion element of First Embodiment schematically showing a relationship between the control signal CLK of the switch, the voltage of the node nodeA, the voltage of the node nodeB, and the output signals. Fig. 5 shows a case in which the control signal CLK is a pulse signal having a constant repetition cycle.

In the photoelectric conversion device of the Embodiment, when the control signal CLK is at a high level, the drive voltage VH is in a state of being less likely to be supplied to the APD, and when the control signal CLK is at a low level, the drive voltage VH is in a state of being supplied to the APD. The high level of the control signal CLK is 1 V, for example, and the low level of the control signal CLK is 0 V, for example.

The switch 202 is turned off when the control signal CLK is at the high level, and the switch 202 is turned on when the control signal CLK is at the low level. The resistance value of the switch 202 when the control signal CLK is at the high level is higher than the resistance value of the switch 202 when the control signal CLK is at the low level.

When the control signal CLK is at the high level, since a recharging operation is less likely to be performed even if avalanche multiplication occurs in the APD, the voltage supplied to the APD becomes a voltage equal to or lower than the breakdown voltage of the APD. Therefore, an avalanche multiplication operation in the APD stops.

At a time t1, the control signal CLK changes from the high level to the low level, the switch 202 is turned on, and a recharging operation of the APD starts. Accordingly, the voltage of the cathode of the APD shifts to the high level.

Further, the voltage difference between the voltages applied to the anode and the cathode of the APD is in a state allowing avalanche multiplication. The voltage of the cathode is the same as that of the node nodeA. Therefore, when the voltage of the cathode shifts to the high level from the low level, the voltage of the node nodeA becomes equal to or higher than the judgment threshold at a time t2.

At this time, pulse signals output from the node nodeB are inverted and shift to the low level from the high level. When recharging is completed, the APD 201 is in a state in which the voltage difference between the drive voltage VH and the drive voltage VL is applied. Thereafter, the control signal CLK is at the high level, and the switch 202 is turned off.

Next, at a time t3, when photons are incident on the APD 201, avalanche multiplication occurs in the APD 201, an avalanche multiplication current flows in the switch 202, and the voltage of the cathode drops. Namely, the voltage of the node nodeA drops.

If the voltage of the nodeA becomes lower than the judgment threshold while the voltage of the node nodeA is dropping, the voltage of the node nodeB changes from the low level to the high level. Namely, a part whose output waveform exceeds the judgment threshold in the node nodeA is subjected to waveform shaping by the waveform shaping unit 210 and output as signals in the nodeB. Further, they are counted by the counter circuit, and the count value of counter signals output from the counter circuit increases by an amount corresponding to 1 LSB.

Photons are incident on the APD between the time t3 and a time t4, but the switch 202 is in an OFF state, and the voltage applied to the APD 201 does not meet the voltage difference allowing avalanche multiplication. Therefore, the voltage level of the node nodeA does not exceed the judgment threshold.

At the time t4, the control signal CLK changes from the high level to the low level, and the switch 202 is turned on. Consequently, a current compensating for an amount corresponding to the voltage drop from the drive voltage VL flows in the node nodeA, and the voltage of the node nodeA shifts to the original voltage level. At this time, since the voltage of the node nodeA becomes equal to or higher than the judgment threshold at a time t5, pulse signals of the node nodeB are inverted and changes from the high level to the low level.

At a time t6, the node nodeA settles to the original voltage level, and the control signal CLK changes from the low level to the high level. Hereinafter, as described for the period the time t1 to the time t6, the voltages of the nodes, the signal lines, and the like change in response to the control signal CLK or incidence of photons. In this manner, the frequency of recharging the APD can be controlled by applying the control signal CLK to the switch 202 to switch the switch 202 between ON and OFF.

When the control signal CLK is not used, there is an issue that the actual count value will become smaller than the count value corresponding to the brightness of incident light at the time of a high brightness. However, this issue can be resolved by applying the control signal CLK to the switch 202 to switch between ON and OFF of the switch 202.

A period from the time t1 when a recharging operation starts to the time t4 when a next recharging operation starts corresponds to a recharge cycle. In addition, the length of a period (from t1 to tN in Fig. 5) during which the frequency of recharging is controlled by controlling the control signal CLK corresponds to the length of the exposure time.

However, in the case of controlling the frequency of recharging the APD by the control signal CLK, count omissions occur when a plurality of photons are incident in one pulse cycle. For this reason, the relationship between the number of input signals and the number of output signals is not linear.

When images of ordinary stationary light are captured, the relationship between the number of input signals and the number of output signals can be theoretically derived from a statistical distribution of the number of incident photons. Specifically, when the number of input signals is Nph, the number of output signals is Nct, the recharge cycle of the control signal CLK is T, and the length of the exposure time is t, the following Expression 1 is established.

$$\text{Nct} = \frac{t}{T}\left(1 - e^{-\frac{t}{T}Nph}\right)$$

.... (Expression 1)

Therefore, in the Embodiment, the number of incident photons in one pulse cycle is statistically estimated from the number of output signals Nct using the following Expression 2. Accordingly, an influence of count omissions can be recovered by correction processing in a signal processing unit 804 (which will be described below). That is, correction of nonlinearity of the number of output signals Nct in the counter circuit can be realized by the signal processing unit 804 performing the processing of Expression 2.

$$\text{Nph} = -\frac{t}{T} \times \ln\left(\frac{1 - Nct}{\frac{t}{T}}\right)$$

.... (Expression 2)

Meanwhile, under an environment where a light source flashing within one frame, particularly an LED light source using a pulse modulation-type drive method, is used as illumination, many count omissions occur compared to when stationary light is used. For this reason, the accuracy of count omission correction processing deteriorates, and the color tone changes compared to that in the actual environment.

Hence, in the Embodiment, when the ratio obtained by dividing the saturation judgment count number by the maximum number of times of recharging in the first frame is the first ratio, control is performed such that the ratio obtained by dividing the saturation judgment count number by the maximum number of times of recharging in the second frame different from the first frame is set to be the second ratio. Furthermore, the second ratio is controlled to be smaller than the first ratio.

Accordingly, it is possible to provide a photoelectric conversion element capable of achieving both restriction on change in color tone and restriction on blown-out highlights even under an environment where a flashing light source is used as illumination light.

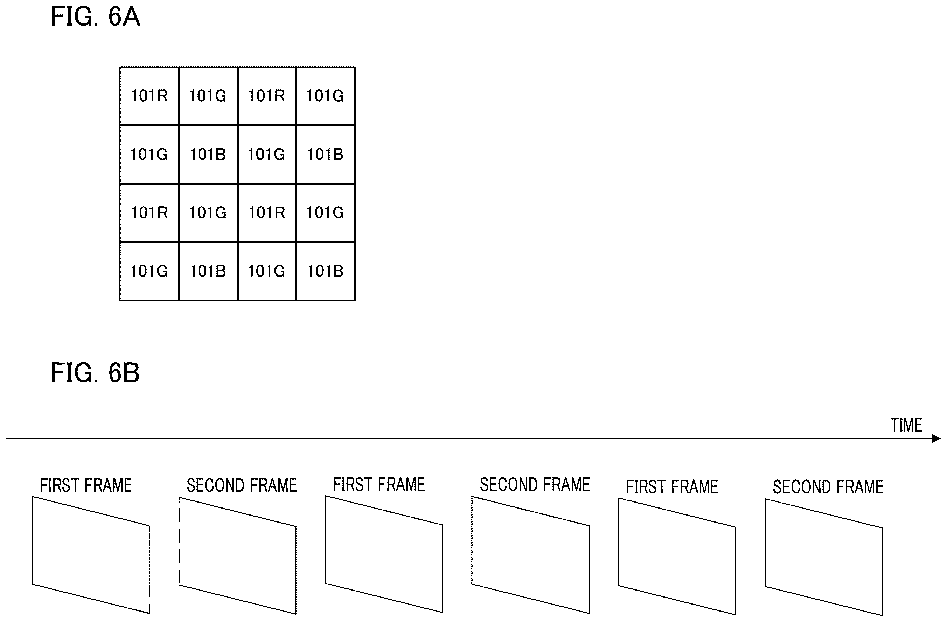

Fig. 6A is a view showing an example of pixel disposition of the photoelectric conversion element of First Embodiment. As shown in Fig. 6A, the photoelectric conversion element of The Embodiment includes an on-chip color filter in each pixel having an avalanche photodiode and the on-chip color filters are disposed in a so-called RGB Bayer array.

However, Y (yellow) pixels or the like other than R, G, and B may be provided, or pixels having no on-chip color filter (W pixels) may be provided. In addition, the on-chip color filter does not have to be a Bayer array.

Fig. 6B is a view showing an example of a drive timing chart of the photoelectric conversion element of First Embodiment. As shown in Fig. 6B, in The Embodiment, the photoelectric conversion element is driven such that the first frames in which the ratio obtained by dividing the saturation judgment count number by the maximum number of times of recharging is set to the first ratio alternate with the second frames in which the ratio obtained by dividing the saturation judgment count number by the maximum number of times of recharging is set to the second ratio.

However, it is not necessarily required for the frames to alternate every other frame. Either the first frames or the second frames may be consecutive for several frames, or the first frames and the second frames may alternate with each other for several frames. In other words, in one embodiment, the first frames and the second frames need only cyclically alternate with each other.

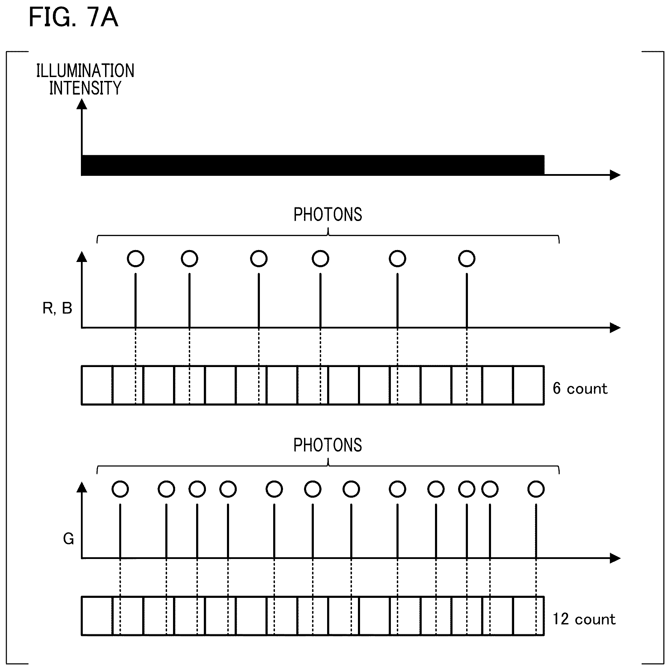

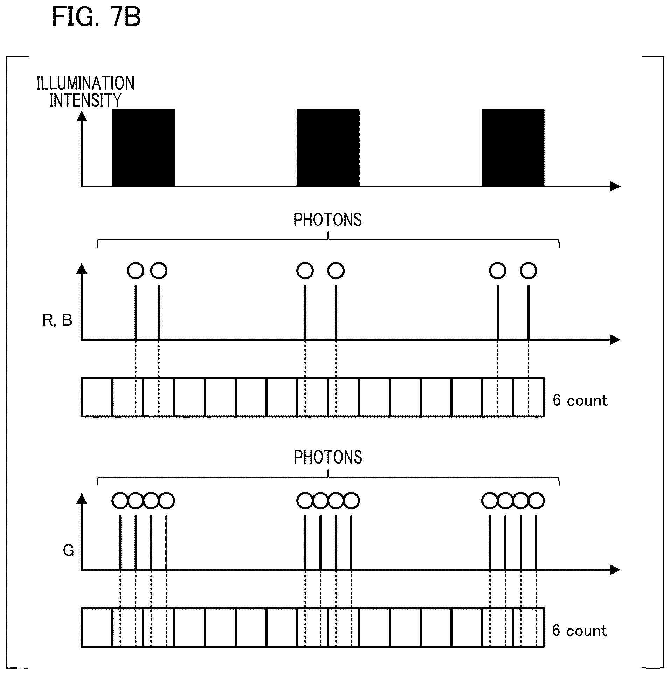

Fig. 7A is an explanatory view of a counting operation when stationary light is used as illumination, and Fig. 7B, in which the illumination intensity when averaged is the same as that in Fig. 7A, is an explanatory view of a counting operation when a light source flashing over time is used as illumination. Hereinafter, a case of using white light as illumination in which the numbers of incident photons per unit time on the R pixels, the G pixels, and the B pixels become 1:2:1 will be described as an example.

When stationary light is incident as in Fig. 7A, since the number of incident photons in each recharge cycle is small, there are few count omissions in each recharge cycle. On the other hand, as in Fig. 6B, when a flashing light source is used as illumination light, since photons are intensively incident in a particular recharge cycle, count omissions will increase.

When illumination light in which the numbers of incident photons per unit time on the R pixels, the G pixels, and the B pixels differ from each other is used, many count omissions assumably occur in pixels of a particular color. Accordingly, the balance between the numbers of counts in the R pixels, the G pixels, and the B pixels is disrupted so that the color tone changes. For example, in the example of Fig. 7B, as a result of many count omissions which have occurred in the G pixels, the color tone changes in the direction of magenta.

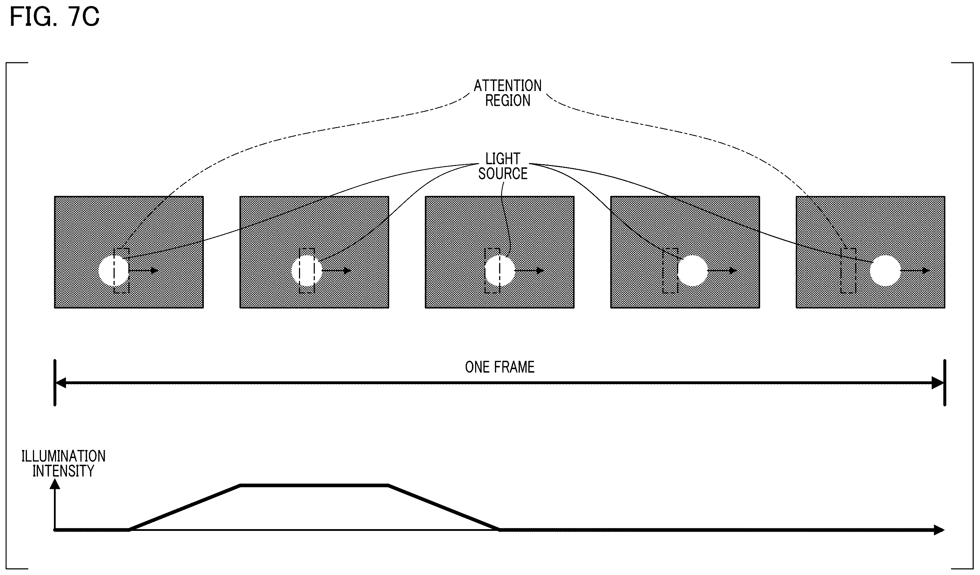

Fig. 7B shows a case in which a flashing light source is used as illumination light. However, similarly, count omissions occur even when a moving light source is used as illumination light. Fig. 7C is an explanatory view of illumination intensities in attention regions when there are light sources moving within one frame.

From Fig. 7C, in the attention regions, it can be seen that there are moments when the illumination intensity is strong and moments when the illumination intensity is weak within one frame. Therefore, similarly to the case in which a flashing light source is used as illumination light, photons are intensively incident in a particular recharge cycle. As a result, count omissions will increase.

Meanwhile, in the photoelectric conversion element of The Embodiment, when the ratio obtained by dividing the saturation judgment count number by the maximum number of times of recharging in the first frame is the first ratio, control is performed such that the ratio obtained by dividing the saturation judgment count number by the maximum number of times of recharging in the second frame is set to be the second ratio. The second frame is a frame different from the first frame, and the second ratio is set to be smaller than the first ratio. Accordingly, it is possible to achieve both restriction on change in color tone and restriction on blown-out highlights.

Hereinafter, a case in which the first ratio obtained by dividing the saturation judgment count number by the maximum number of times of recharging in the first frame is equivalent to the ratio obtained by dividing the saturation judgment count number by the maximum number of times of recharging in a photoelectric conversion element in the related art will be described as an example.

At this time, the saturation judgment count number is 12 (counts), for example. At this time, when a flashing light source is used as illumination light, photons incident on the first frame and the count value are the same as those in Fig. 7B.

Meanwhile, in The Embodiment, the second ratio obtained by dividing the saturation judgment count number by the maximum number of times of recharging in the second frame is set to be smaller than the ratio obtained by dividing the saturation judgment count number by the maximum number of times of recharging in a photoelectric conversion element in the related art. That is, at least any one of the saturation judgment count number and the maximum number of times of recharging in the second frame differs from that in the first frame. A specific example will be described below.

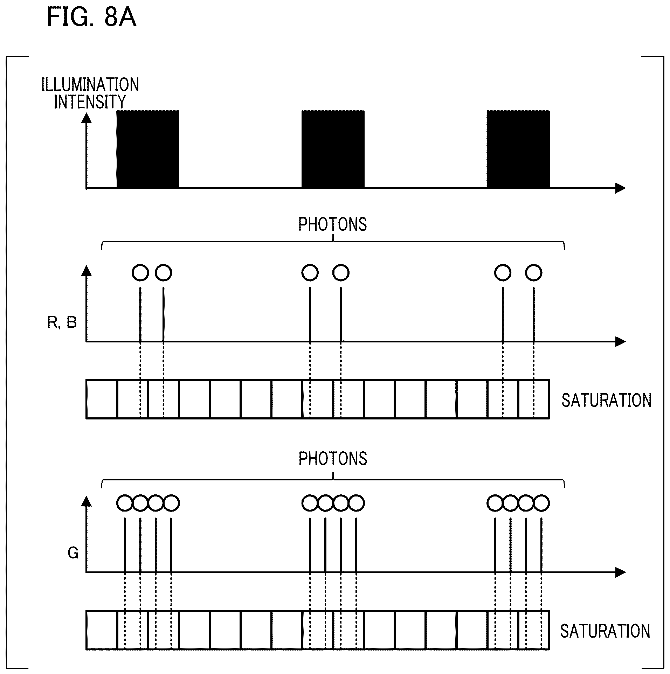

Fig. 8A is a view showing an example in which the second ratio obtained by dividing the saturation judgment count number by the maximum number of times of recharging is set to be smaller than the first ratio by reducing the saturation judgment count number. Since the recharge cycle in Fig. 8A is the same as that in Fig. 7B, count omissions in each recharge cycle occur in the same manner as those in Fig. 7B.

However, since the saturation judgment count number is restricted to six in Fig. 8A, for example, the number of counts is likely to be saturated in the G pixels having a relatively large number of count omissions as well as in the R pixels and the B pixels having a relatively small number of count omissions, and therefore change in color tone can be restricted.

That is, for example, when the saturation judgment count number is set to six (counts) in Fig. 8A, the color tone does not change in the direction of magenta as in Fig. 7B, and all pixels of R, G, and B are saturated, that is, expressed as white.

In this manner, change in color tone can be restricted by reducing the saturation judgment count number. That is, since the saturation judgment count number in the second frame is set to be smaller than the saturation judgment count number in the first frame, change in color tone is further restricted in the case of the number of counts acquired in the second frame than in the first frame.

Meanwhile, as can be seen through the comparison between Figs. 7B and 8A, if the saturation judgment count number is set to six (counts) as in Fig. 8A, for example, blown-out highlights are more likely to occur in an image in the case of the count value acquired in the second frame than in the first frame. That is, blown-out highlights in an image are further restricted in the case of the number of counts acquired in the first frame than in the second frame.

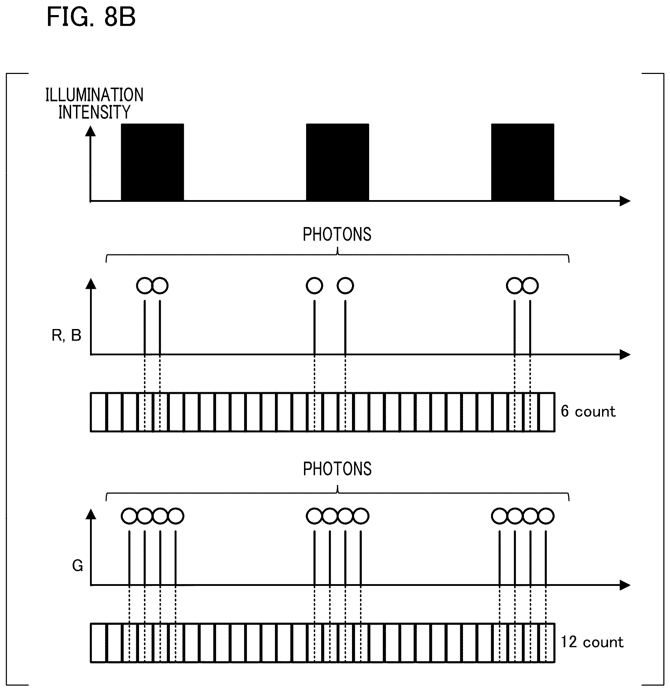

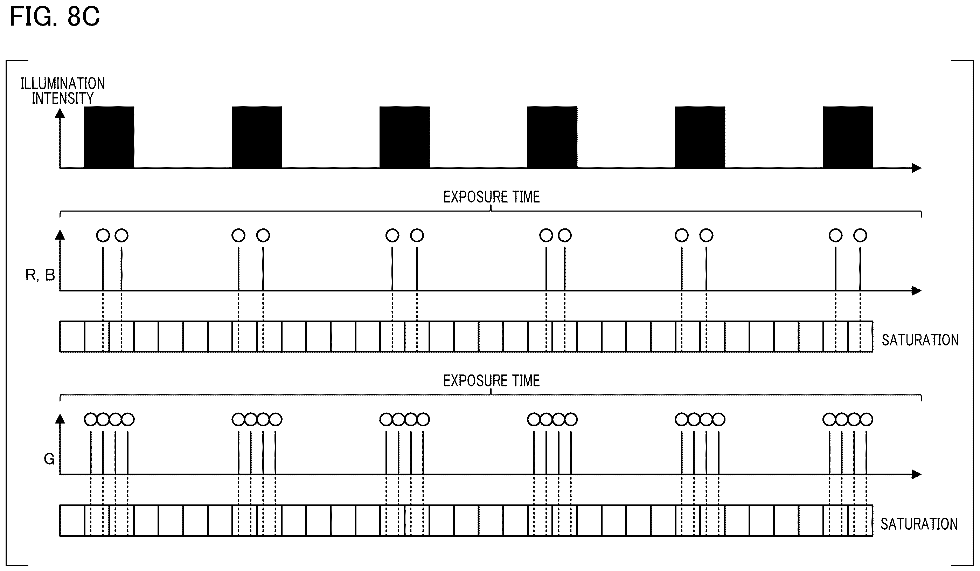

Figs. 8B and 8C show an example in which the second ratio obtained by dividing the saturation judgment count number by the maximum number of times of recharging is set to be smaller than the first ratio by increasing the maximum number of times of recharging. That is, an example in which the maximum number of times of recharging in the second frame is larger than the maximum number of times of recharging in the first frame is shown. In Figs. 8B and 8C, the saturation judgment count number is set to 12 in the same manner as those in Figs. 7A and 7B, for example.

Since the maximum number of times of recharging is a value obtained by dividing the exposure time by the recharge cycle, the recharge cycle may be shortened or the exposure time may be lengthened in order to increase the maximum number of times of recharging.

Fig. 8B is a view showing an example in which the second ratio obtained by dividing the saturation judgment count number by the maximum number of times of recharging is set to be smaller than the first ratio by shortening the recharge cycle. That is, in Fig. 8B, the recharge cycle in the second frame is set to be shorter than the recharge cycle in the first frame.

As shown in Fig. 8B, since the number of incident photons in each recharge cycle can be reduced by shortening the recharge cycle, count omissions can be restricted. As a result, change in color tone can be restricted.

That is, as shown in Fig. 8B, the count values of the R pixels and the B pixels are set to six and the count value of the G pixels is set to 12 by shortening the recharge cycle, change in color tone can be restricted. That is, change in color tone is further restricted in the case of the number of counts acquired in the second frame than in the first frame.

However, in the example of Fig. 8B, since the ratio of count omissions of the G pixels is smaller than that in Fig. 7B, the count value of the G pixels is likely to increase. That is, blown-out highlights are more likely to occur in an image in the case of the count value acquired in the second frame than in the first frame. That is, blown-out highlights in an image are further restricted in the case of the number of counts acquired in the first frame than in the second frame.

In Fig. 8B, the recharge cycle is changed by changing the frequency of the control signal CLK. That is, the recharge cycle in the second frame is set to be shorter than the recharge cycle in the first frame by changing the frequency of a pulse signal for controlling switching of the switch.

However, the recharge cycle may be changed by masking a part of the control signal CLK. That is, the recharge cycle in the second frame may be set to be shorter than the recharge cycle in the first frame by masking a part of a pulse signal for controlling switching of the switch.

Moreover, a recharge cycle T may be changed by causing the control signal CLK to be turned on at all times, that is, by fixing a logic. That is, the recharge cycle in the second frame may be set to be shorter than the recharge cycle in the first frame by fixing the logic of the switch in the second frame. At this time, the recharge cycle T is not determined by the cycle (=zero) of the control signal CLK and may be determined by analog characteristics of surrounding circuits of the APD.

Fig. 8C is a view showing an example in which the second ratio obtained by dividing the saturation judgment count number by the maximum number of times of recharging is set to be smaller than the first ratio by lengthening the exposure time. That is, an example in which the exposure time of the second frame is set to be longer than the exposure time of the first frame is shown. If the recharge cycle in Fig. 8C is set to be the same as that in Fig. 7B, for example, count omissions in each recharge cycle occur in the same manner as those in Fig. 7B.

However, since the exposure time is long, the number of counts is likely to increase within the exposure time in the G pixels having a relatively large number of count omissions as well as in the R pixels and the B pixels having a relatively small number of count omissions. That is, all the pixels of R, G, and B are likely to be saturated. Therefore, similarly to the case of Fig. 8A in which the saturation judgment count number is reduced, change in color tone is restricted.

As above, change in color tone can be restricted by lengthening the exposure time. That is, change in color tone is further restricted in the case of the number of counts acquired in the second frame than in the first frame.

Meanwhile, as can be seen from Fig. 8C, blown-out highlights are more likely to occur in an image in the case of the count value acquired in the second frame than in the first frame. That is, blown-out highlights in an image are further restricted in the case of the number of counts acquired in the first frame than in the second frame.

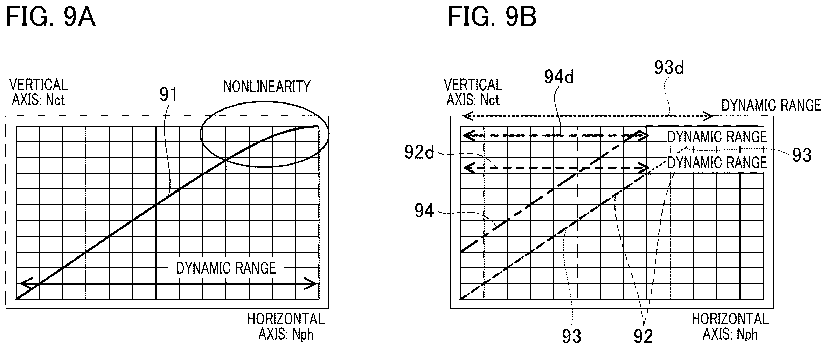

Figs. 9A and 9B are views each expressing response characteristics of the pixels in the first frame and the second frame, showing double-logarithmic graphs with Nph on the horizontal axis and Nct on the vertical axis. The solid line 91 in Fig. 9A indicates the response characteristics of the first frame, and the dashed line 92 in Fig. 9B indicates the response characteristics of the pixels in the second frame when the saturation judgment count number is reduced as in Fig. 8A.

In addition, in Fig. 9B, the dotted line 93 indicates the response characteristics when the recharge cycle is shortened as in Fig. 8B, and the chain line 94 indicates the response characteristics of the pixels in the second frame when the exposure time is lengthened as in Fig. 8C.

As can be seen through the comparison between Figs. 9A and 9B, it can be seen that the nonlinearity of the response characteristics is alleviated in all of the dashed line 92, the dotted line 93, and the chain line 94. Since the nonlinearity of the response characteristics occurs due to an influence of count loss, it can also be seen from Figs. 9A and 9B that change in color tone can be further restricted in the second frame than in the first frame.

From the response characteristics in Figs. 9A and 9B, it can be seen that the dynamic range on the bright side is wider in the first frame than in the second frame. That is, it can be seen that blown-out highlights are further restricted relatively in the first frame, and change in color tone is further restricted relatively in the second frame.

In Fig. 9B, 92d, 93d, and 94d indicate the dynamic ranges corresponding to 92, 93, and 94, respectively. As can be seen from Fig. 9B, the dynamic range of the pixels in the second frame is wider when the recharge cycle is changed as indicated by the dotted line 93 than when the saturation judgment count number is reduced as indicated by the dashed line 92 or when the exposure time is changed as indicated by the chain line 94. Therefore, in one embodiment, the recharge cycle is changed.

However, if the recharge cycle is shortened, power consumption of the APD increases. Since power consumption of the APD is proportional to the Nct, in another embodiment, the saturation judgment count number is changed when reduction of power consumption is a priority.

Meanwhile, when the exposure time is changed (chain line 94), the inclination of the Nct with respect to the Nph changes (however, since Fig. 9 shows logarithmic graphs, the chain line 94 is shifted in parallel to the dashed line 92 and the dotted line 93). For this reason, in one embodiment, the first frame and the second frame are synthesized because it allows generation of an image having a wide dynamic range.

Specifically, the count value acquired in the second frame may be used for a dark subject, and the count value acquired in the first frame may be used for a bright subject. Moreover, a plurality of saturation judgment count numbers, exposure times, and recharge cycles may be combined and changed between the first frame and the second frame.

As described above, the smaller the ratio obtained by dividing the saturation judgment count number by the maximum number of times of recharging, the further the change in color tone can be restricted, and the larger the ratio obtained by dividing the saturation judgment count number by the maximum number of times of recharging, the further the blown-out highlights can be restricted.

Therefore, in one embodiment, the difference between the first ratio obtained by dividing the saturation judgment count number by the maximum number of times of recharging in the first frame and the second ratio is obtained by dividing the saturation judgment count number by the maximum number of times of recharging in the second frame be larger because it allows restriction on both change in color tone and blown-out highlights to be achieved. Specifically, in one embodiment, the second ratio is half or smaller than the first ratio and in another embodiment, 1/8 times or smaller than the first ratio.

As above, in the photoelectric conversion element of First Embodiment, under an environment where a flashing light source is used as illumination light, it is possible to acquire signals in which blown-out highlights are restricted using the first frame and signals in which change in color tone is restricted using the second frame.

<Second Embodiment>

Compared to the photoelectric conversion element of First Embodiment, a photoelectric conversion element (photoelectric conversion device) of Second Embodiment has a judgment unit judging the degree of change in color tone by comparing the count value in the nearby first frame and the count value in the second frame.

The judgment unit may be provided inside the photoelectric conversion element, specifically on the circuit board 21, or may be constituted of a computer program, a dedicated circuit such as the signal processing unit 804 (which will be described below), a processor, or the like provided outside the photoelectric conversion element. In addition, the judgment unit and the photoelectric conversion element do not have to be built into the same casing and may be constituted of separate devices connected to each other via a signal path.

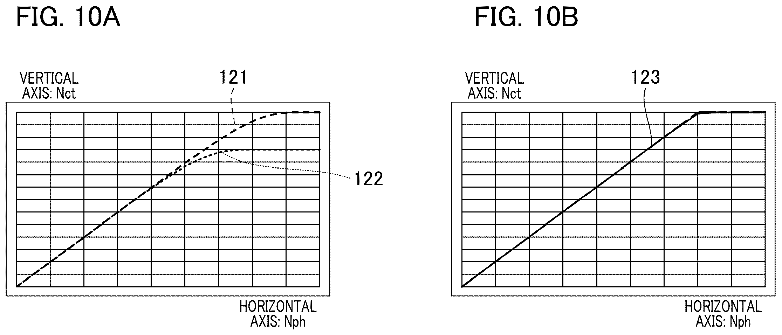

Fig. 10A is a view showing an example of response characteristics of the pixels in the first frame. The dashed line 121 indicates the response characteristics when stationary light is used as illumination light and the dotted line 122 indicates the response characteristics when a flashing light source is used as illumination light. Fig. 10B is a view showing an example of response characteristics of the pixels in the second frame.

The solid line 123 in Fig. 10B shows a case in which stationary light is used as illumination light and a case in which a flashing light source is used as illumination light. For example, Figs. 10A and 10B show cases in which the recharge cycle is changed between the first frame and the second frame.

The response characteristics of the pixels in the first frame and the pixels in the second frame when stationary light is used as illumination light correspond to Expression 1 described above. When a flashing light source is used as illumination light, the output when the number of incident photons is large decreases due to an influence of count omissions.

As described above, since the influence of count omissions can be reduced in the second frame, as shown in Fig. 10B, decrease in output when a flashing light source is used as illumination light is small. Meanwhile, since the influence of count omissions is significant in the first frame, as shown in Fig. 10A, decrease in output when a flashing light source is used as illumination light is significant.

Therefore, it can be seen that stationary light is used as illumination light when a third ratio NR, obtained by the following Expression 3, of the number of incident photons obtained from output values of the pixels in the first frame to the number of incident photons obtained from output values of the pixels in the second frame is close to 1. That is, change in color tone can be judged on the basis of the ratio of the number of incident photons obtained from the output values in the first frame to the number of incident photons obtained from the output values in the second frame.

Meanwhile, if the third ratio NR of the output values of the pixels in the first frame to the output values of the pixels in the second frame obtained by Expression 3 is smaller than 1, it can be seen that a flashing light source is used as illumination light. In Expression 3, T1 indicates the recharge cycle in the first frame, and T2 indicates the recharge cycle in the second frame.

$$
N R = \frac{T_2 \times \ln\left(\dfrac{1 - Nct}{\dfrac{t}{T_1}}\right)}{T_1 \times \ln\left(\dfrac{1 - Nct}{\dfrac{t}{T_2}}\right)} \quad \text{.... (Expression 3)}
$$

The third ratio NR may be obtained for each smallest pixel unit of a pixel array (four pixels ($2\times2$) in the case of the Bayer array in Fig. 6A), or one third ratio NR may be obtained for a plurality of pixel units. When one third ratio NR is obtained for a plurality of pixel units, computation of Expression 3 may be performed using the average value or the median value of the values of a plurality of pixels for each of the first frame and the second frame.

In addition, as in Fig. 6A, when the photoelectric conversion element 100 has pixels provided with an on-chip color filter with a plurality of kinds of colors, in one embodiment, the third ratio NR for each color is obtained. The degree of count loss occurring in the output value of the pixel for each color can be obtained from the third ratio NR of each color.

Therefore, change in color tone can be obtained more accurately than when simply using Expression 3 by obtaining the third ratio NR for each color and obtaining the difference in the third ratio for each color. Specifically, NR_R/NR_G and NR_B/NR_G may be obtained by obtaining a third ratio NR_R for the R pixels, a third ratio NR_G for the G pixels, and a third ratio NR_B for the B pixels.

In this manner, change in color tone is judged by obtaining the third ratio of the number of incident photons obtained from the output values in the first frame to the number of incident photons obtained from the output values in the second frame for each color.

In one embodiment, the first frame and the second frame used for judging change in color tone are framed closer to each other in time, and in one embodiment, the first frame and the second frame are adjacent frames. Therefore, as in Fig. 6B, the first frame and the second frame are driven alternately.

<Third Embodiment>

A photoelectric conversion element (photoelectric conversion device) of Third Embodiment has a synthesis processing unit synthesizing the output values in the nearby first frame and the output values of the pixels in the second frame in accordance with judgment results judged by the judgment unit, and generating a synthesized image in which blown-out highlights and change in color tone are restricted.

The synthesis processing unit may be provided inside the photoelectric conversion element, specifically on the circuit board 21, or may be constituted of a photoelectric conversion element, a computer program having a judgment unit or a dedicated circuit such as the signal processing unit 804 (which will be described below), a processor, or the like. In addition, the judgment unit and the photoelectric conversion element do not have to be built into the same casing and may be constituted of separate devices connected to each other via a signal path.

An image in which blown-out highlights and change in color tone are restricted may be generated using judgment information as follows, for example. Stationary light is used as illumination light, and the output values of the pixels in the first frame are used for pixel units in which restriction on blown-out highlights is important. Further, a flashing light source is used as illumination light, and the output values of the pixels in the second frame are used for pixel units in which restriction on change in color tone is important.

That is, a synthesized image may be generated using the output values in the first frame when the third ratio NR is equal to or larger than a particular threshold, and using the output values in the second frame when the third ratio NR is smaller than the particular threshold. As described above, the third ratio NR is a ratio of the number of incident photons obtained from the output values in the first frame to the number of incident photons obtained from the output values in the second frame.

As described above, since it can be seen that a flashing light source is used as illumination light if the third ratio NR is smaller than 1, for example, in one embodiment, it is to use 1, for example, as the particular threshold. However, since there is an influence of an error when the third ratio NR is derived out, in another embodiment the particular threshold is set to 1/2 or larger.

When synthesis processing is performed, it is to have a large number of pixels in which the third ratio NR is obtained, since this can restrict an error in the third ratio NR caused by an influence such as optical shot noise and can improve the accuracy of judging the degree of change in color tone.

Meanwhile, particularly when both stationary light and a flashing light source are used as illumination, the smaller number of pixels, in which the third ratio NR is obtained, makes it possible to select which pixel output of the first frame and the second frame is to be used for each micro-pixel unit. As a result, the effects of restriction on blown-out highlights and restriction on change in color tone are improved.

As described above, the number of output signals Nct (count value) of pixels and the number of photons Nph incident on pixels differ from each other, and the response characteristics thereof are determined by the ratio obtained by dividing the saturation judgment count number by the maximum number of times of recharging. For this reason, synthesis processing is performed with respect to each of the output values of the pixels in the first frame and the output values of the pixels in the second frame using a value subjected to correction processing of Expression 2.

Specifically, the output values of the pixels in the first frame may be subjected to correction using the following Expression 4, and the output values of the pixels in the second frame may be subjected to correction processing using the following Expression 5. That is, in the synthesis processing unit, a synthesized image is generated after different nonlinearity correction processing is performed with respect to each of the output values of the pixels in the first frame and the output values of the pixels in the second frame.

$$\mathrm{Nph} = -\frac{t}{T_1} \times \ln\left(\frac{1 - Nct}{\frac{t}{T_1}}\right) \quad \text{.... (Expression 4)}$$

$$\mathrm{Nph} = -\frac{t}{T_2} \times \ln\left(\frac{1 - Nct}{\frac{t}{T_2}}\right) \quad \text{.... (Expression 5)}$$

<Fourth Embodiment>

In Fourth Embodiment, using the judgment information acquired from the first frame and the second frame, drive conditions suited for illumination light are selected in a next frame in which the judgment information is acquired.

Specifically, in a next frame in which the judgment information is acquired, the drive conditions suited for illumination light are selected in a next frame in which the judgment information is acquired by changing at least one of the saturation judgment count number, the exposure time, and the recharge cycle.

That is, a photoelectric conversion element (photoelectric conversion device) of Fourth Embodiment differs from the photoelectric conversion element of Second Embodiment in having a selection unit for selecting the drive conditions for the next frame in accordance with judgment results judged by the judgment unit.

The selection unit may be provided inside the photoelectric conversion element, specifically on the circuit board 21, or may be constituted of a photoelectric conversion element, a computer program having a judgment unit or a dedicated circuit such as the signal processing unit 804 (which will be described below), a processor, or the like. In addition, the selection unit and the photoelectric conversion element do not have to be built into the same casing and may be constituted of separate devices connected to each other via a signal path.

Further, in the pixel units in which it has been ascertained from the judgment information that stationary light is used as illumination light, since it is important to restrict blown-out highlights, the drive conditions are used for the first frame.

Meanwhile, in the pixel units in which it has been ascertained from the judgment information that a flashing light source is used as illumination light, since it is important to restrict change in color tone, the drive conditions are used for the second frame. In other words, the drive conditions are used for the first frame in the next frame when the third ratio NR is equal to or larger than the particular threshold.

Meanwhile, in one embodiment, the drive conditions are used for the second frame in the next frame when the third ratio NR is smaller than the particular threshold (for example, 1/2). As described above, the third ratio NR is a ratio of the number of incident photons obtained from the output values in the first frame to the number of incident photons obtained from the output values in the second frame.

In one embodiment 1 is used, for example, as the particular threshold. However, since there is an influence of an error occurring when the third ratio NR is derived out, the particular threshold to 1/2 or larger and smaller than 1 is set. That is, since there is an influence of an error occurring when the third ratio NR is derived out, in one embodiment, the particular threshold is set to 1/2 or larger.

Instead of changing the drive conditions for the next frame, in which the judgment information is acquired, for each pixel unit, the same drive conditions may be used for all the pixels. Specifically, for example, when it has been ascertained from the judgment information for more than half of the pixel units that stationary light is used, the drive conditions are used for the first frame for all the pixels.

Meanwhile, for example, when it has been ascertained from the judgment information for more than half of the pixel units that flashing illumination light is used, in one embodiment, the drive conditions are used for the second frame for all the pixels. In other words, for example, in one embodiment, the drive conditions are determined for the next frame and thereafter, in which the judgment information is acquired, on the basis of the judgment information on more than half of the pixels.

At this time, when the drive conditions for the first frame or the second frame are used for all frames after the judgment information has been acquired, judgment results of change in color tone cannot be obtained any longer in the following frames.

For this reason, for some of a small number of frames, the drive conditions different from those for many other frames are sued. Specifically, the frequency of a small number of frames are adjusted such that the ratio of the frequency of the frames using the drive conditions for the first frame to the frequency of the frames using the drive conditions for the second frame becomes 1/4 times or smaller or four times or larger.

As can be seen from Fig. 9, the larger the ratio obtained by dividing the saturation judgment count number by the maximum number of times of recharging, the further the blown-out highlights are restricted, and the smaller the ratio obtained by dividing the saturation judgment count number by the maximum number of times of recharging, the further the change in color tone is restricted. For this reason, regarding the drive conditions for the next frame, different drive conditions other than the drive conditions for the first frame and the drive conditions for the second frame may be able to be selected.

For example, assuming that the illumination intensities of all the flashing light sources are constant, the shorter the lighting time of the flashing light source, the stronger the illumination light at the moment of being lighted. Therefore, count omissions are likely to occur, and change in color tone increases.

For this reason, when it has been ascertained from the judgment information that change in color tone is greater than a predetermined first value, in one embodiment, the ratio obtained is further reduced by dividing the saturation judgment count number by the maximum number of times of recharging in the next frame than the second frame by the predetermined first ratio.

In addition, when it has been ascertained that change in color tone is smaller than a predetermined second value, the ratio obtained by dividing the saturation judgment count number by the maximum number of times of recharging is further increased in the next frame than the second frame by the predetermined second ratio. At this time, the first ratio and the second ratio may differ from each other. In one embodiment, the foregoing first value is to be larger than the second value.

In addition, when it has been ascertained from the judgment information that change in color tone is small, the ratio obtained by dividing the saturation judgment count number by the maximum number of times of recharging may be set to a value between the ratio in the first frame and the ratio in the second frame in the next frame.

<Fifth Embodiment>

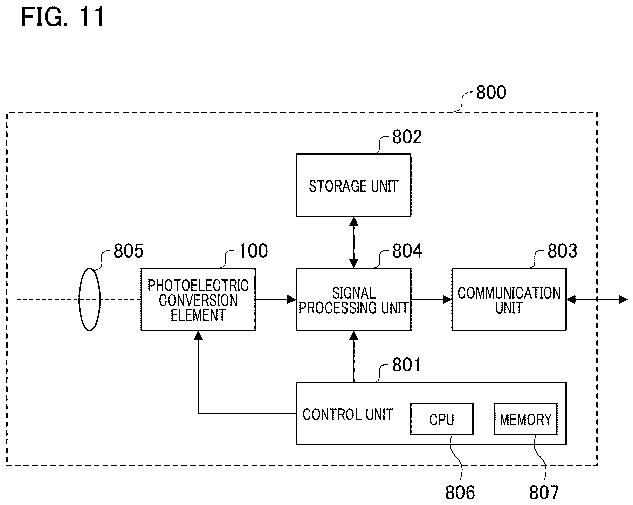

Fig. 11 is a functional block diagram showing an example of a constitution of the photoelectric conversion element using the photoelectric conversion devices of First Embodiment to Fourth Embodiment. Some of the functional block shown in Fig. 11 are realized by a CPU or the like, which serves as a computer included in the photoelectric conversion device, executing a computer program stored in the memory serving as a storage medium.

However, some or all of them may be realized by hardware. A dedicated circuit (ASIC), a processor (reconfigurable processor, DSP), or the like can be used as the hardware. In addition, the functional block shown in Fig. 11 does not have to be built into the same casing and may be constituted of separate devices connected to each other via a signal path.

A photoelectric conversion device 800 includes the photoelectric conversion element 100, the control unit 801, a storage unit 802, a communication unit 803, the signal processing unit 804, and an image forming optical system 805. In the photoelectric conversion element 100, optical images formed by the image forming optical system 805 are captured. Signals read from the photoelectric conversion element 100 are supplied to the signal processing unit 804.

The signal processing unit 804 performs processing such as black level correction, gamma curve adjustment, noise reduction, data compression, white balance correction, and color conversion. A part of the signal processing unit 804 or the like may be included in the signal processing circuit 103. Conversely, a part of the signal processing circuit 103 may be included in the signal processing unit 804 or the like.

In the signal processing unit 804, using Expression 2 described above, the nonlinearity of the number of output signals Nct of the counter circuit 211 is corrected. Accordingly, a final image is generated. Due to such a constitution, even under an environment where a flashing light source is used as illumination light, it is possible to realize a photoelectric conversion element in which change in color tone can be restricted.

A CPU 806 serving as a computer is built into the control unit 801 and functions as a control means for controlling operations of units of the entire photoelectric conversion device 800 on the basis of the computer program stored in a memory 807 serving as a storage medium.

In addition, the control unit 801 controls the length of the exposure time of each frame of the photoelectric conversion element 100, the timing of the control signal CLK, and the like via the control pulse generation unit 115 of the photoelectric conversion element 100. That is, the control unit 801 controls the exposure time of the avalanche photodiode and controls the recharge cycle of the avalanche photodiode.

For example, the storage unit 802 includes a recording medium such as a memory card or a hard disk. The communication unit 803 includes a wireless or wired interface, thereby outputting generated images to the outside of the photoelectric conversion device 800 and receives signals from the outside.

While the disclosure has been described with reference to Embodiments, it is to be understood that the disclosure is not limited to the disclosed Embodiments. The scope of the following claims is to be accorded the broadest interpretation so as to encompass all such modifications and equivalent structures and functions.

In addition, as a part or the whole of the control according to the Embodiments, a computer program realizing the function of the Embodiments described above may be supplied to the photoelectric conversion device or the like through a network or various storage media. Then, a computer (or a CPU, an MPU, or the like) of the photoelectric conversion device or the like may be configured to read and execute the program. In such a case, the program and the storage medium storing the program configure the invention.

In addition, the disclosure includes those realized using at least one processor or circuit configured to perform functions of the Embodiments explained above. For example, a plurality of processors may be used for distribution processing to perform functions of the Embodiments explained above.

This application claims the benefit of Japanese Patent Application No. 2024-224692, filed on December 20, 2024, which is hereby incorporated by reference herein in its entirety.

**Claims**

1. A photoelectric conversion device comprising:

   an avalanche photodiode;
   a counter counting and outputting the number of output signals from the avalanche photodiode until the number reaches a count number;
   control an exposure time of the avalanche photodiode and control a recharge cycle of the avalanche photodiode , wherein the control unit is configured to perform control such that a ratio of the count number to a maximum number of times of recharging determined by a quotient obtained by dividing the exposure time by the recharge cycle is set to a first ratio in a first frame, and the ratio of the count number to the maximum number of times of recharging is set to a second ratio smaller than the first ratio in a second frame.

2. The photoelectric conversion device according to claim 1,
   wherein the count number in the second frame is smaller than the count number in the first frame.

3. The photoelectric conversion device according to claim 1 or 2,
   wherein the maximum number of times of recharging in the second frame is larger than the maximum number of times of recharging in the first frame.

4. The photoelectric conversion device according to claim 3,
   wherein the recharge cycle in the second frame is shorter than the recharge cycle in the first frame.

5. The photoelectric conversion device according to any one of claims 1 to 4, further comprising:
   a switch connected to one node of an anode and a cathode of the avalanche photodiode and a power supply line to which a drive voltage is applied, and to control the recharge cycle by switching a resistance value between the one node and the power supply line.

6. The photoelectric conversion device according to any one of claims 1 to 5,
   wherein the exposure time of the second frame is longer than the exposure time of the first frame.

7. The photoelectric conversion device according to any one of claims 1 to 6,
   wherein the first frame and the second frame alternate cyclically.

8. The photoelectric conversion device according to any one of claims 1 to 7,
   wherein the control unit is configured to judge a degree of change in color tone by comparing a count value of the first frame and a count value of the second frame.

9. The photoelectric conversion device according to claim 8,
   wherein the control unit is configured to generate a synthesized image in which change in color tone is restricted by synthesizing output values of the first frame and the second frame in accordance with judgment results judged in the judgment.

10. The photoelectric conversion device according to claim 9,
    wherein the control unit is configured to generate the synthesized image after different nonlinearity correction processing is performed with respect to each of the output value of the first frame and the output value of the second frame in generating the synthesized image.

11. The photoelectric conversion device according to any one of claims 8 to 10,
    wherein the control unit is configured to select drive conditions for a next frame in accordance with judgment results judged in the judgment.

12. The photoelectric conversion device according to any one of claims 1 to 11,
    wherein each pixel having the avalanche photodiode includes an on-chip color filter.

13. The photoelectric conversion device according to claim 12,
    wherein the control unit is configured to judge change in color tone by obtaining a ratio of a number of incident photons obtained from an output value of the first frame to a number of incident photons obtained from an output value of the second frame for each color.

14. A photoelectric conversion method for controlling a photoelectric conversion element having an avalanche photodiode, and a counter counting and outputting a number of output signals from the avalanche photodiode until the number reaches a count number, the method comprising:

controlling an exposure time of the avalanche photodiode and controlling a recharge cycle of the avalanche photodiode, and

performing control such that a ratio of the count number to a maximum number of times of recharging determined by a quotient obtained by dividing the exposure time by the recharge cycle is set to a first ratio in a first frame, and the ratio of the count number to the maximum number of times of recharging is set to a second ratio smaller than the first ratio in a second frame.

15. A non-transitory computer-readable storage medium configured to store a computer program for a photoelectric conversion method to execute the following processes:

the photoelectric conversion method being a method for controlling a photoelectric conversion element having an avalanche photodiode, and a counter counting and outputting the number of output signals from the avalanche photodiode until the number reaches a count number, the method including

controlling an exposure time of the avalanche photodiode and controlling a recharge cycle of the avalanche photodiode, and

performing control such that a ratio of the count number to the maximum number of times of recharging determined by a quotient obtained by dividing the exposure time by the recharge cycle is set to a first ratio in a first frame, and the ratio of the count number to the maximum number of times of recharging is set to a second ratio smaller than the first ratio in a second frame different from the first frame.

FIG. 1

EP 4 765 850 A1

FIG. 2

17

FIG. 3

FIG. 4

FIG. 5

EP 4 765 850 A1

## FIG. 6A

| 101R | 101G | 101R | 101G |
|------|------|------|------|
| 101G | 101B | 101G | 101B |
| 101R | 101G | 101R | 101G |
| 101G | 101B | 101G | 101B |

## FIG. 6B

TIME

FIRST FRAME    SECOND FRAME    FIRST FRAME    SECOND FRAME    FIRST FRAME    SECOND FRAME

FIG. 7A

ILLUMINATION
INTENSITY

PHOTONS

R, B

6 count

PHOTONS

G

12 count

FIG. 7B

ILLUMINATION
INTENSITY

PHOTONS

R, B

6 count

PHOTONS

G

6 count

FIG. 7C

ATTENTION REGION

LIGHT SOURCE

ONE FRAME

ILLUMINATION INTENSITY

EP 4 765 850 A1

FIG. 8A

## FIG. 8B

ILLUMINATION
INTENSITY

PHOTONS

R, B

6 count

PHOTONS

G

12 count

# FIG. 8C

FIG. 9A

FIG. 9B

# FIG. 10A

VERTICAL
AXIS: Nct

121

122

HORIZONTAL
AXIS: Nph

# FIG. 10B

VERTICAL
AXIS: Nct

123

HORIZONTAL
AXIS: Nph

FIG. 11

## EUROPEAN SEARCH REPORT

**Application Number**

EP 25 22 2941

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/370741 A1 (TOJIMA KENZO [JP]) 16 November 2023 (2023-11-16) <br> * abstract * <br> * figures 1, 3, 4A-B, 6, 8 * <br> * paragraph [0037] * <br> * paragraph [0047] * <br> * paragraph [0058] * <br> * paragraph [0065] - paragraph [0066] * <br> * paragraph [0068] * <br> * paragraph [0072] - paragraph [0073] * <br> * paragraph [0083] - paragraph [0084] * <br> * paragraph [0086] * <br> * paragraph [0117] - paragraph [0120] * <br> * paragraph [0127] - paragraph [0129] * <br> * paragraph [0208] * <br> ----- | 1-15 | INV. <br> H04N25/53 <br> H04N23/741 <br> H04N23/743 <br> H04N23/745 <br> H04N25/589 <br> H04N25/773 |
| Y | US 2023/247307 A1 (NUMATA AIHIKO [JP]) 3 August 2023 (2023-08-03) <br> * abstract * <br> * figures 11A-B, 13B, 15A-B * <br> * paragraph [0004] * <br> * paragraph [0108] - paragraph [0111] * <br> * paragraph [0123] - paragraph [0126] * <br> * paragraph [0144] - paragraph [0145] * <br> ----- | 1-15 | |
| Y <br><br> A | US 2024/284069 A1 (SATO KOHEI [JP]) 22 August 2024 (2024-08-22) <br> * abstract * <br> * figures 3, 4A-B * <br> * paragraph [0047] - paragraph [0048] * <br> ----- | 8-11,13 <br><br> 1-7,12, 14,15 | **TECHNICAL FIELDS SEARCHED (IPC)** <br><br> H04N |
| A | US 2023/343879 A1 (OTA YASUHARU [JP] ET AL) 26 October 2023 (2023-10-26) <br> * abstract * <br> * figures 4A-B, 6A-C, 7A-C, 8 * <br> * claims 1-7, 13 * <br> * paragraph [0096] - paragraph [0099] * <br> ----- | 1-15 | |

The present search report has been drawn up for all claims

| Place of search | Date of completion of the search | Examiner |
|---|---|---|
| Munich | 25 March 2026 | Furlan, Silvano |

EPO FORM 1503 03.82 (P4C01)

## ANNEX TO THE EUROPEAN SEARCH REPORT
## ON EUROPEAN PATENT APPLICATION NO.

EP 25 22 2941

25-03-2026

| Patent document cited in search report | | Publication date | Patent family member(s) | | Publication date |
|---|---|---|---|---|---|
| US 2023370741 A1 | | 16-11-2023 | JP | 2023168794 A | 29-11-2023 |
| | | | US | 2023370741 A1 | 16-11-2023 |
| US 2023247307 A1 | | 03-08-2023 | EP | 4221247 A1 | 02-08-2023 |
| | | | JP | 7703464 B2 | 07-07-2025 |
| | | | JP | 2023110533 A | 09-08-2023 |
| | | | US | 2023247307 A1 | 03-08-2023 |
| US 2024284069 A1 | | 22-08-2024 | JP | 2024118936 A | 02-09-2024 |
| | | | US | 2024284069 A1 | 22-08-2024 |
| US 2023343879 A1 | | 26-10-2023 | EP | 4277263 A1 | 15-11-2023 |
| | | | JP | 7661212 B2 | 14-04-2025 |
| | | | JP | 2022106660 A | 20-07-2022 |
| | | | JP | 2025092560 A | 19-06-2025 |
| | | | KR | 20230128061 A | 01-09-2023 |
| | | | US | 2023343879 A1 | 26-10-2023 |
| | | | WO | 2022149576 A1 | 14-07-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020123847 A
- JP 2024 A
- JP 224692 A